# EUROPEAN PATENT SPECIFICATION

(11) **EP 3 932 233 B1**
(45) Date of publication and mention of the grant of the patent: **07.10.2026**
(21) Application number: 21182102.0
(22) Date of filing: 28.06.2021
(51) Int. Cl.: A41D 13/015, A41D 13/06, B29L 31/00, B29C 44/42, B29C 44/12, B29C 44/14

(54) **CUSTOMIZABLE KNEE PADS AND PROCESS OF FORMING THE SAME**
ANPASSBARE KNIEPOLSTER UND VERFAHREN ZUR FORMUNG DAVON
GENOUILLÈRES PERSONNALISABLES ET LEUR PROCÉDÉ DE FABRICATION

(30) Priority: 30.06.2020 US 202016916891
(43) Date of publication of application: 05.01.2022
(73) Proprietor: Toughbuilt Industries, Inc., Lake Forest, California 92630 (US)
(72) Inventor: KEELER, Joshua, Lake Forest, 92630 (US); PANOSIAN, Michael, Irvine, 92618 (US)
(74) Representative: Gill Jennings & Every LLP

(56) References cited:
- US-A1- 2017 079 440
- US-A1- 2018 213 857
- US-B2- 7 841 019

## Description

### BACKGROUND OF THE INVENTION

### 1. Field of the Invention

The present invention generally relates to knee protective devices and, more specifically, to customizable knee pads and process of forming the same.

### 2. Description of background art

Manufacturers offer numerous knee pads that are intended for different activities, for example, for sports and extreme sports, for dancing and acrobatics, for working and military purposes. In addition, all of these knee pads are being adjusted for more specific purposes, for example, nowadays every knee pad has to be not only protective, but also comfortable, flexible, lightweight, breathable, easy to use and wash, stylish, qualitative, affordable and so on. In one word, needs and wants of consumers and professionals are only increasing, therefore manufacturers constantly have to develop and innovate their products.

The main function of knee pads is knee protection against different knee injuries that are usually caused by blows, attrition, pressure and other outer impacts during physical activities. Considering the fact, that protection is not the only required feature of knee pads, manufacturers have to invent the way, how to combine protection with other necessary features. One of such attempts is usage of different materials which could provide the maximum of features, including protection, comfort, flexibility, likable and modern design, quality and affordability.

The main element of a knee pad is padding or, in other words, cushioning that is placed on the kneecap and that has the main role in the prevention of knees injuries. Padding can be made of various materials, for example, polyurethane foam, polyethylene foam, ethyl vinyl acetate foam, nylon foam, neoprene foam, polyvinyl chloride foam, extruded polystyrene foam, rubber, plastic, gel, carbon fiber and other materials.

Another difference is knee pads cushioning type - some of them have a shell or cap type padding that is usually is made of plastic, rubber, gel, carbon fiber or other durable and high density material which can ensure constant protection. The inside of these shells is usually covered by a softer and more elastic material to provide a better conformation to the shape of the kneecap and thus comfort. Some knee pads have padding which is made of soft, but durable and protective material such as foam - PU foam, PE foam, EVA foam, PVC foam, XPS foam, nylon foam and neoprene foam. Many knee pads have hex-pad padding which is made of dozens of separate hexagon type pads, therefore they are providing better conformation to the shape of the knee and thus comfort and flexibility. These hexagon type pads usually are made of some foam which is able to absorb the shock of different blows. Hexagon type pads often are called as honeycomb type pads because of their similarity. Some of knee pads have bubble type cushioning which also is made of some foam to protect the knee against different impacts.

Knee pads can be categorized by their usage in different niches, for example, sports knee pads, dance knee pads, work knee pads, military knee pads and others. These knee pads differ from each other with functionality and level of protection. For example, knee pads for sports and dancing are more comfortable and flexible, but knee pads for working and military are thicker, denser and more durable.

Working knee pads, especially for the pro trades may not be so flexible, but they have to be extremely durable and comfortable, because in such works as carpeting, concreting, tiling, flooring, gardening and construction workers have to spend a lot of time on their knees, therefore the padding has to be as comfortable as possible, thereby reducing the pressure on knees and thus knee pain and fatigue. Working knee pads for pros in the trades are mostly used for preventing of occupational knee injuries. There are many working knee pads, for example, hard-cap, curved soft cap, flat-cap knee pads, kneeling pads, rolling knee pads, knee inserts, and all of them are designed for certain and specific purposes.

Military knee pads or, in other words, tactical knee pads usually are the part of the uniform among military and they are made of extremely durable and dense bulletproof material, making them bullet-proof and thus safe in almost every situation. Such knee pads are meant not only for safety against bullets or other dangerous impacts, but also for knee protection against bruises or abrasions caused by crawling or squatting during warfare or other training exercises.

U.S. Patent No. 7,018,351 discloses an orthopedic support using a molded pad and a rigid shell. The internal structure is molded to include the geometrically shaped cells of various sizes, shapes and thickness to provide different levels of localized comfort to the user. The pad is made from a thermoplastic elastomer (TPE) that is spring -like and resists compression sets. The TPE material is injection molded to include detailed designs such as geometrically shaped cells. Soft foam can be embedded between the rigid cells in the padding. As another option, gel is used in place of the soft foam. However, the level of desired cushioning is provided by utilizing multiply sized cells, rods and various protrusions. As an alternate to the use of variously shaped cells and protrusions a softer foam may be embedded between rigid cell walls. Typically, the over mold that seals the TPE pad to the shell is made of the same material as the padding and also partially covers the shell. Another option is to use gel in place of the soft phone or the molded TPE pad.

While numerous knee pad designs have been proposed they have not been readily customizable and have typically required intricate and expensive molds and processes for manufacturing the products to adapt them for specific applications.

US 7841019 B2 discloses protective knee pad according to the preamble of claim 1 and pairs of knee pads constructed to cover and protect the lower thigh, knee, and upper shin.

### SUMMARY OF THE INVENTION

Accordingly, it is an object of the invention to provide a knee pad that does not have the disadvantages inherent in prior art knee pads

It is another object of the invention to provide a knee pad that is readily customizable.

It is still another object of the invention to provide a knee pad as aforementioned that is simple in construction and economical to manufacture.

It is yet another object of the invention to provide a knee pad that is easy and convenient to use.

It is a further object of the invention to provide a knee pad that can be formed to provide a desired level of softness or hardness, depending the use or application.

It is still a further object of the invention to provide a molded knee pad that can be over molded on a gel insert that becomes integrated with the foam shell or form, thereby simplifying the molding process and preventing shifting of the gel insert over time.

It is yet a further object of the invention to provide a molded knee pad that has a soft fabric backing sheet that can be integrated with the molded foam shell or form to facilitate manufacture and prevent separation of the fabric sheet from the foam shell or form after extended use

In order to achieve the above objects, as well as others that will become evident to those skilled in the art, a knee pad according to claim 1 is provided. A customizable knee pad in accordance with the invention comprises a main body of a compressible material having an anterior or exterior surface defining a surface A and a posterior surface molded to the shape of the knee. The anterior surface is formed with an array of spaced recesses over a predetermined region covering the knee to be protected. Each recess defines an incremental area and said recesses over a predetermined region collectively or cumulatively define an area Aᵣ. The effective area A_{eff} of the anterior surface that is not recessed is approximately equal to A_{eff} = A - Aᵣ. A fabric sheet covers the rear or posterior surface as will be more fully described. A gel pad is provided within the main body in proximity to the fabric sheet.

The main body of the knee pad is injection molded with the gel layer and fabric sheet in place during the molding process to bond the fabric sheet and gel pad to the molded main body to be integrally formed therewith. Since the force required to deform a solid is directly proportional to the effective surface area that is deformed in compression at least in the linear region of the material that follows Hooks Law by selectively modifying the effective surface area in the predetermined region can alter the flexibility of the material in compression and, therefore, render the material harder or softer.

The method of forming a knee pad in accordance with claim 5 is provided. The method optionally includes the steps of providing a mold configured to impart to an interior surface of any paired with an array of recesses over the predetermined region for protection of the knee pad, the density and sizes of the resulting recesses determining the affected area for compression. A gel insert is supported within the mold and the mold is covered with a fabric sheet or layer in close proximity to the supported gel insert. A spray foam is then injected into the mold until the mold is filled with foam to encapsulate the gel insert and contact the fabric sheet so that the foam bonds to the gel insert and the fabric sheet. The cumulative incremental areas of the resulting recesses on the interior surface of the resulting knee pad main body in the separation of the recesses is selected to provide knee pads that have normal or medium hardness, knee pads that are softer or harder for the same or like density foam materials.

### BRIEF DESCRIPTION OF THE DRAWINGS

The above and other aspects, features and advantages of the present invention will be more apparent from the following description when taken in conjunction with the accompanying drawings, in which:
Fig. 1 is a perspective view of a knee pad in accordance with the invention;

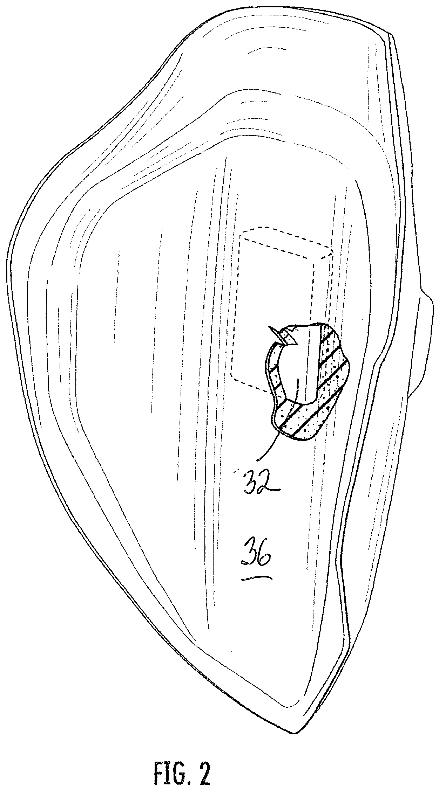

Fig. 2 is a rear perspective view of the knee pad shown in Fig. 1;

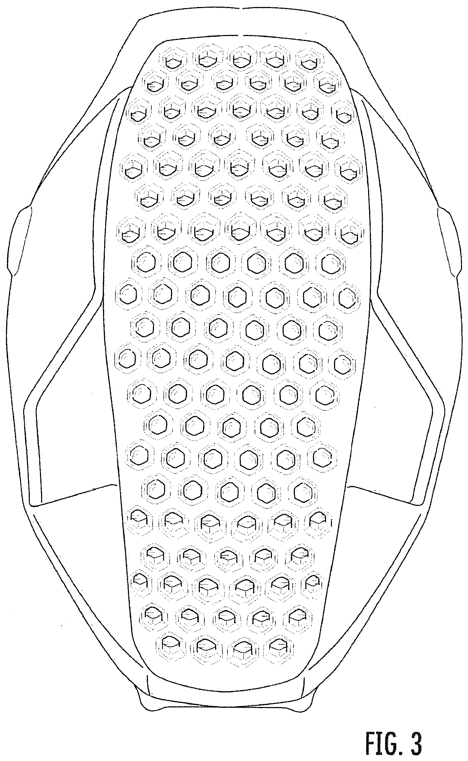

Fig. 3 is a front elevation view of the knee pad shown in Figs. 1 and 2;
Fig. 4 is similar to Fig. 1 which shows a modified array of recesses having different sizes and spacings from the ones shown in Fig. 1;
Fig. 5 is a cross-sectional view of a mold used to form the knee pad shown in Figs. 1 and 2;
Fig. 6 is similar to Fig. 5 showing the posterior or inside sheet of fabric supported at the ends of the mold and a gel pad or insert supported in close proximity behind the fabric sheet; and
Fig. 7 is similar to Figs. 5 and 6 and show the knee pad after the foam material has been injected to contact and/or encapsulate the gel insert and fabric sheet thereby bonding the knee pad with the fabric sheet and gel insert.

### DETAILED DESCRIPTION

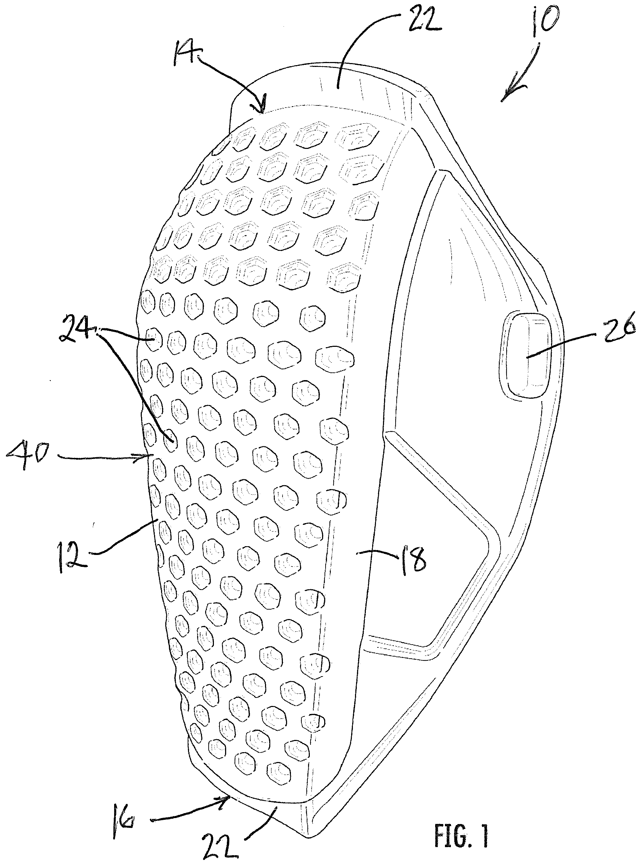

Referring now specifically to the Figures, in which the identical or similar parts are designated by the same reference numerals throughout, and first referring to Fig. 1, a knee pad in accordance with the present invention is generally designated by the reference 10.

In its final molded form the main body 40 of the knee pad 10 defines an outer or anterior surface 12 that has a top end 14, a bottom end 16 and lateral ends 18. The anterior or outer surface 12 defines a region that covers and protects the knee. However, while the anterior surface 12 is shown to extend between bottom and top extensions 20, 22 the effective anterior surface can be modified to render it more centralized over the knee cap short of the extensions 20, 22.

The anterior or outer surface 12 is formed with an array of recesses 24 two the effective area of the anterior or outer surface. Thus, if the overall area of the anterior or outer surface 12 is A and the cumulative area represented by the array of recesses 24 is Aᵣ than the effective surface area A_{eff} is A_{eff} = A - Aᵣ. It is clear that the effective surface area A_{eff} decreases as the cumulative area Aᵣ of the recesses 24 increases.

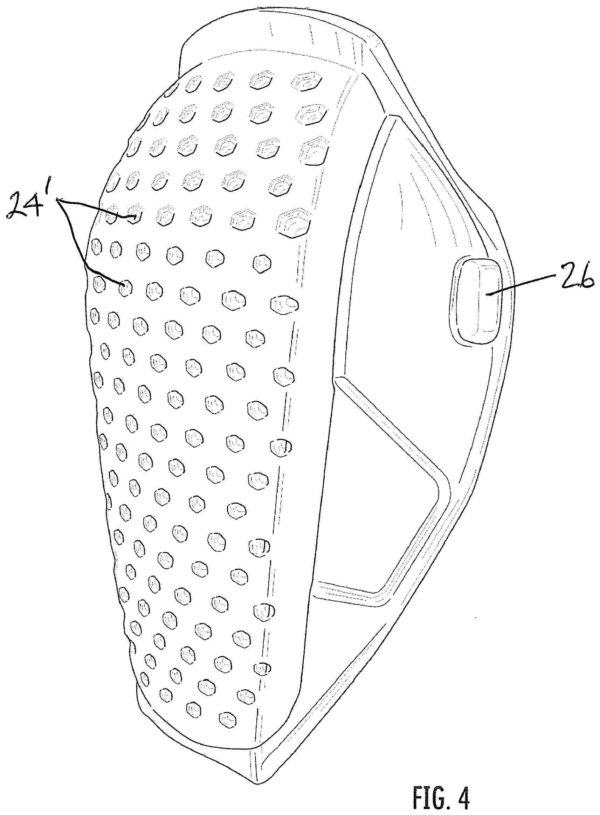

Referring to Fig. 4, an alternate array of recesses is shown in which the size of the recesses 24'is smaller than those shown in Fig. 1 and the spacing between the recesses within the array is also smaller. Using the array of Fig. 4 would result in a stiffer knee pad. It will be clear, therefore, that selecting the size and shapes of the recesses as well as their spacing within the array can produce a knee pad for normal use, a softer knee pad or a harder one using the same or similar foam material depending on the application or use to which the knee pad is intended. It may also be possible to use the same mold only modified with an insert to reflect the size, shape and spacing of the recesses within the array.

The specific cross-sectional shape of the recesses 24 is not critical and recesses in the shapes of circles, squares, hexagons triangles, etc. can be used. The cumulative area of the recesses 24 can modified by changing not only the shapes and sizes of the recesses but the spacing of the recesses in the array.

The knee pad can also be formed without the recesses 24. The knee pad would still benefit from the unitary or integrated bonding of the gel insert 32 and fabric sheet 36 to the injected foam main body 40 that would resist separation of the gel insert and/or fabric sheet from the main body with extended use.

The lateral sides 18 extend to each side of the kneepad and provide lateral protection to the knee as well as provides rigidity to the main body of the resulting knee pad. The top and bottom extensions 20, 22 also help to rigidify the structure and these are not within the protective region of the knee pad that can be adjusted or modified in terms of hardness and softness. The lateral sides 18 also include ears 26 used to attach a strap for securing the knee pad to the leg of the user. Any conventional straps, including elastic straps, can be used.

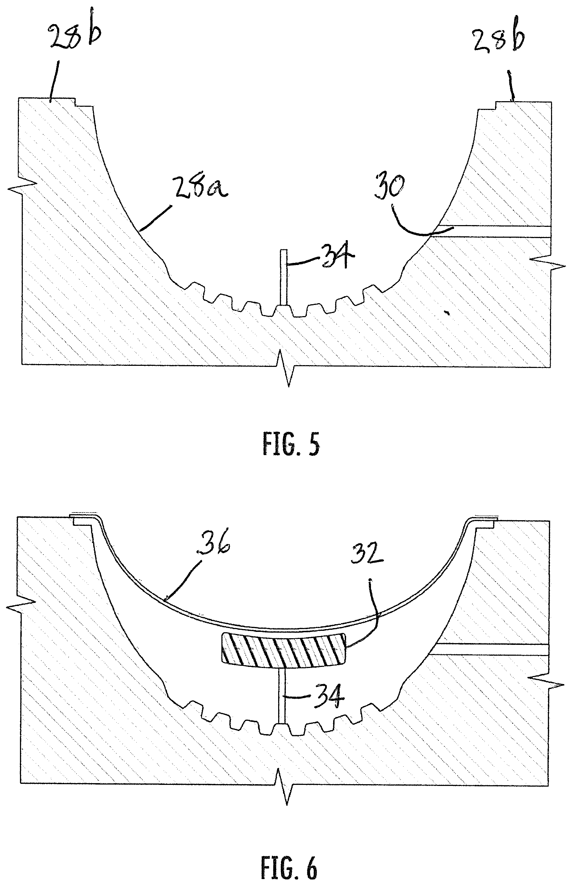

Referring to figs 5-7, the process of making the knee pad in accordance with the invention is illustrated. The mold 28 includes an internal surface 28a that conforms to the outer or anterior surface 12. In the top of 28 and to each side of the internal surface 28a are support or bearing surfaces 20b. The mold has an inlet channel 34 for injecting foam material to form the knee pad 10.

In Fig. 6, a gel pad 32 is supported above the surface 28a by a support member 34. A fabric sheet will layer 36 extends across the surface 20a and supported by the support or bearing surfaces 20b. The fabric layer 36 is conformed to the desired shape to generally correspond to the shape and size of the knee to be protected. The support member 34 is selected to position the gel pad 32 in close proximity to the fabric sheet.

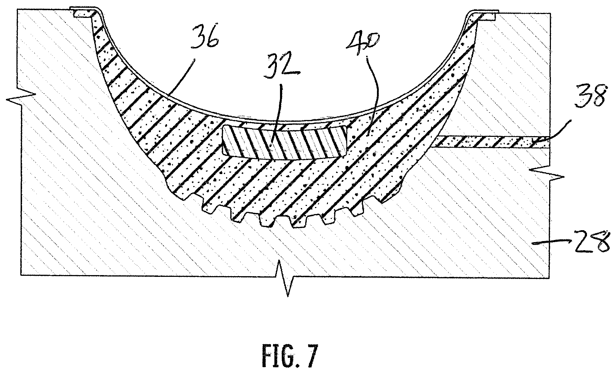

Referring to Fig. 7, the foam 38 is shown injected through the channel or passageway 32 fill the entire volume between the mold surface 28 a and the fabric sheet 36 thereby fully encapsulating the gel pad 32 and contacting the inner surface of the fabric sheet 36. As the foam 38 sets and bonds to both the gel insert or pad 32 as well as to the fabric sheet 36. Such bond is very strong and resists separation of the fabric sheet 36 from the main body 40, in most cases being stronger than a bond between the fabric sheet 36 and an applied adhesive. Also, because of the strong bond between the main body and the gel pad or insert 32 this ensures that the gel pad does not shift initially or with extended use. This is different from most knee pads that employ a gel insert placed within a surface recess after the main body 40 has been molded, a common complaint with existing knee pads.

The foregoing is considered as illustrative only of the principles of the invention. Further modifications and changes will readily occur to those skilled in the art. The invention is not limited to the exact construction and operation shown and described, and accordingly, all suitable modifications and equivalents may be resorted to, falling within the scope of the claims.

## Claims

1. A knee pad (10) comprising a main body (40) formed of a compressible material (38), such as foam, having an anterior or exterior surface (12) and a posterior or interior surface moldable to the shape of a user's knee; a fabric layer (36) extending along and conforming to said interior surface; and a gel pad (32) positioned between said interior and exterior surfaces and positioned to be juxtaposed with a kneecap of the user when the knee pad is worn by the user, **characterised in that** said main body is injection molded to bond to said fabric layer and fully encapsulate said gel pad within said compressible material, whereby a layer of compressible material is formed between said gel pad and said fabric layer.

2. A knee pad as defined in claim 1, wherein said compressible material is foam.

3. A knee pad as defined in claim 1, wherein said compressible material is formed on said exterior surface with an array of recesses (24) configured to provide a knee pad of a desired softness.

4. A knee pad as defined in claim 1, wherein said main body has lateral sides (18), and ears (26) on said lateral sides for attachment of a knee pad strap.

5. A method of producing a knee pad (10) comprising the steps of positioning and maintaining a gel pad (32) inside a mold; arranging a fabric sheet (36) in close proximity to but spaced from said gel pad; forming the knee pad insert by injection molding to form an anterior or exterior surface (12) and a posterior or interior surface that can be molded to the shape of a user's knee and to fully encapsulate said gel pad to provide a layer of compressible material (38) between said gel pad and said fabric layer.

6. A method as defined in claim 5, wherein said main body is formed by injection of a foam material.

7. A knee pad as defined in claim 1, wherein said anterior surface is formed with an array of spaced recesses over a predetermined region.

8. A knee pad as defined in claim 1, wherein said gel pad is spaced from said interior surface and said fabric layer a distance smaller than a distance of said gel pad from said exterior surface.

9. A knee pad as defined in claim 8, wherein said main body of said insert has a maximum thickness T between said interior and exterior surfaces and said gel pad is spaced a distance t from said interior surface and T/t ~13.

10. A knee pad as defined in claim 8, wherein said gel pad has a thickness t_{g} and said main body of said insert has a maximum thickness T and T/t_{g} ∼3.7.

11. A knee pad as defined in claim 8, wherein said gel pad is spaced from said interior surface a distance t and is spaced a distance t' from said exterior surface and t'/t ~ 8.5.

12. A knee pad as defined in claim 8, wherein said gel pad has thickness t_{g} and is spaced from said interior surface a distance t and t_{g}/t ~ 3.5.

## Patentansprüche

1. Kniepolster (10), umfassend einen Hauptkörper (40), gebildet aus einem komprimierbaren Material (38), wie beispielsweise Schaumstoff, aufweisend eine vordere oder äußere Oberfläche (12) und eine hintere oder innere Oberfläche, die an die Form eines Knies eines Benutzers anpassbar ist; eine Gewebeschicht (36), die sich entlang der inneren Oberfläche erstreckt und sich dieser anpasst; und ein Gelpolster (32), das zwischen der inneren und der äußeren Oberfläche angeordnet ist und so positioniert ist, dass es an eine Kniescheibe des Benutzers angrenzt, wenn das Kniepolster vom Benutzer getragen wird, **dadurch gekennzeichnet, dass** der Hauptkörper spritzgegossen ist, um sich mit der Gewebeschicht zu verbinden und das Gelpolster vollständig in dem komprimierbaren Material einzukapseln, wodurch zwischen dem Gelpolster und der Gewebeschicht eine Schicht aus komprimierbarem Material gebildet wird.

2. Kniepolster nach Anspruch 1, wobei das komprimierbare Material Schaumstoff ist.

3. Kniepolster nach Anspruch 1, wobei das komprimierbare Material auf der äußeren Oberfläche mit einer Anordnung von Vertiefungen (24) ausgebildet ist, die so ausgebildet sind, dass sie ein Kniepolster mit einer gewünschten Weichheit bereitstellen.

4. Kniepolster nach Anspruch 1, wobei der Hauptkörper laterale Seiten (18) und Ösen (26) an den lateralen Seiten zur Befestigung eines Kniepolsterriemens aufweist.

5. Verfahren zum Herstellen eines Kniepolsters (10), umfassend die Schritte Positionieren und Halten eines Gelpolsters (32) innerhalb einer Form; Anordnen einer Gewebebahn (36) in unmittelbarer Nähe zu dem Gelpolster, jedoch von diesem beabstandet; Bilden des Kniepolster-Einsatzes durch Spritzgießen, um eine vordere oder äußere Oberfläche (12) zu bilden und eine hintere oder innere Oberfläche zu bilden, die entsprechend der Form eines Knies eines Benutzers geformt werden kann und das Gelpolster vollständig umschließt, um eine Schicht aus komprimierbarem Material (38) zwischen dem Gelpolster und der Gewebeschicht bereitzustellen.

6. Verfahren nach Anspruch 5, wobei der Hauptkörper durch Spritzgießen eines Schaumstoffmaterials gebildet wird.

7. Kniepolster nach Anspruch 1, wobei die vordere Oberfläche über einen vorbestimmten Bereich hinweg mit einer Anordnung von voneinander beabstandeten Vertiefungen ausgebildet ist.

8. Kniepolster nach Anspruch 1, wobei das Gelpolster von der inneren Oberfläche und der Gewebeschicht um einen Abstand beabstandet ist, der kleiner ist als ein Abstand des Gelpolsters von der äußeren Oberfläche.

9. Kniepolster nach Anspruch 8, wobei der Hauptkörper des Einsatzes eine maximale Dicke T zwischen der inneren und der äußeren Oberfläche aufweist und das Gelpolster um einen Abstand t von der inneren Oberfläche beabstandet ist und T/t ~ 13 gilt.

10. Kniepolster nach Anspruch 8, wobei das Gelpolster eine Dicke tg und der Hauptkörper des Einsatzes eine maximale Dicke T aufweist und T/t_{g} ~ 3,7 gilt.

11. Kniepolster nach Anspruch 8, wobei das Gelpolster von der inneren Oberfläche um einen Abstand t beabstandet ist und von der äußeren Oberfläche um einen Abstand t' beabstandet ist und t'/t ~ 8,5 gilt.

12. Kniepolster nach Anspruch 8, wobei das Gelpolster eine Dicke tg aufweist und von der inneren Oberfläche um einen Abstand t beabstandet ist und t_{g}/t ~ 3,5 gilt.

## Revendications

1. Genouillère (10) comprenant un corps principal (40) formé d'un matériau compressible (38), tel que de la mousse, présentant une surface antérieure ou extérieure (12) et une surface postérieure ou intérieure moulable à la forme d'un genou d'un utilisateur ; une couche de tissu (36) s'étendant le long de et conforme à ladite surface intérieure ; et un coussin de gel (32) positionné entre lesdites surfaces intérieure et extérieure et positionné pour être juxtaposé à une patella de l'utilisateur lorsque la genouillère est portée par l'utilisateur, **caractérisée en ce que** ledit corps principal est moulé par injection pour adhérer à ladite couche de tissu et encapsuler entièrement ledit coussin de gel au sein dudit matériau compressible, de telle sorte qu'une couche de matériau compressible est formée entre ledit coussin de gel et ladite couche de tissu.

2. Genouillère selon la revendication 1, dans laquelle ledit matériau compressible est de la mousse.

3. Genouillère selon la revendication 1, dans laquelle ledit matériau compressible est formé sur ladite surface extérieure avec un réseau d'évidements (24) configurés pour fournir une genouillère d'une douceur souhaitée.

4. Genouillère selon la revendication 1, dans laquelle ledit corps principal présente des côtés latéraux (18), et des oreilles (26) sur lesdits côtés latéraux pour la fixation d'une sangle de genouillère.

5. Procédé de production d'une genouillère (10) comprenant les étapes de positionnement et de maintien d'un coussin de gel (32) à l'intérieur d'un moule ; d'agencement d'une feuille de tissu (36) à proximité immédiate mais espacée dudit coussin de gel ; de formage de l'insert de genouillère par moulage par injection pour former une surface antérieure ou extérieure (12) et une surface postérieure ou intérieure qui peuvent être moulées en forme d'un genou d'un utilisateur et pour encapsuler entièrement ledit coussin de gel pour fournir une couche de matériau compressible (38) entre ledit coussin de gel et ladite couche de tissu.

6. Procédé selon la revendication 5 dans lequel ledit corps principal est formé par injection d'un matériau en mousse.

7. Genouillère selon la revendication 1, dans laquelle ladite surface antérieure est formée avec un réseau d'évidements espacés sur une région prédéterminée.

8. Genouillère selon la revendication 1, dans laquelle ledit coussin de gel est espacé de ladite surface intérieure et de ladite couche de tissu d'une distance plus petite qu'une distance dudit coussin de gel de ladite surface extérieure.

9. Genouillère selon la revendication 8, dans laquelle ledit corps principal dudit insert présente une épaisseur maximale T entre lesdites surfaces intérieure et extérieure et ledit coussin de gel est espacé d'une distance t de ladite surface intérieure et T/t 13.

10. Genouillère selon la revendication 8, dans laquelle ledit coussin de gel présente une épaisseur t_{g} et ledit corps principal dudit insert présente une épaisseur maximale T et T/t_{g} ~ 3,7.

11. Genouillère selon la revendication 8, dans laquelle ledit coussin de gel est espacé de ladite surface intérieure d'une distance t et est espacé d'une distance t' de ladite surface extérieure et t'/t ~ 8,5.

12. Genouillère selon la revendication 8, dans laquelle ledit coussin de gel présente une épaisseur t_{g} et est espacé de ladite surface intérieure d'une distance t et t_{g}/t ~ 3,5.
